(19) Europäisches Patentamt

European Patent Office

Office européen des brevets

(11) **EP 1 411 758 B1**

(12) **EUROPEAN PATENT SPECIFICATION**

(45) Date of publication and mention
of the grant of the patent:
**11.03.2009 Bulletin 2009/11**

(21) Application number: **02748217.3**

(22) Date of filing: **19.07.2002**

(51) Int Cl.:
***A01C 21/00*** *(2006.01)*

(86) International application number:
**PCT/US2002/023133**

(87) International publication number:
**WO 2003/009669 (06.02.2003 Gazette 2003/06)**

(54) **A PROCESS FOR IN-SEASON NUTRIENT APPLICATION BASED ON PREDICTED YIELD POTENTIAL**

VERFAREN ZUM AUSBRINGEN VON DÜNGER BASIEREND AUF VORHERGESAGTEM ERTRAGSPOTENTIAL

PROCEDE D'APPLICATION D'UN ELEMENT NUTRITIF EN HAUTE-SAISON FONDE SUR LE POTENTIEL DE RENDEMENT PREVU

(84) Designated Contracting States:
**AT BE BG CH CY CZ DE DK EE ES FI FR GB GR IE IT LI LU MC NL PT SE SK TR**

(30) Priority: **24.07.2001 US 911867
12.07.2002 US 195138**

(43) Date of publication of application:
**28.04.2004 Bulletin 2004/18**

(73) Proprietor: **THE BOARD OF REGENTS FOR OKLAHOMA STATE UNIVERSITY
Stillwater, OK 74078 (US)**

(72) Inventors:
• **RAUN, William, R.**
**Stillwater, OK 74074 (US)**
• **JOHNSON, Gordon, V.**
**Stillwater, OK 74074 (US)**
• **SOLIE, John, B.**
**Stillwater, OK 74074 (US)**
• **STONE, Marvin, L.**
**Stillwater, OK 74074 (US)**

(74) Representative: **Horner, David Richard
D Young & Co
120 Holborn
London EC1N 2DY (GB)**

(56) References cited:
**WO-A-01/45490         DE-A- 19 860 306
DE-A- 19 913 971      US-A- 6 052 187**

**Description**

BACKGROUND OF THE INVENTION

1. Field of the Invention:

This invention relates generally to a method for determining a rate of application of fertilizer. More particularly, but not by way of limitation, the present invention relates a method for in-season macro and micronutrient application based on mid-season predicted yield potential.

2. Background:

Presently, there is a need for a convenient method to determine the amount of fertilizer required to maximize the yield of a particular crop. While soil samples may be analyzed to determine the soil condition, the process is neither convenient nor is it conducive to advanced farming techniques such as precision farming.

"Precision farming" is a term used to describe the management of intrafield variations in soil and crop conditions. "Site specific farming", "prescription farming", and "variable rate application technology" are sometimes used synonymously with precision farming to describe the tailoring of soil and crop management to the conditions at discrete, usually contiguous, locations throughout a field. The size of each location depends on a variety of factors, such as the type of operation performed, the type of equipment used, the resolution of the equipment, as well as a host of other factors. Generally speaking, the smaller the location size, the greater the benefits of precision farming, at least down to approximately one square meter.

Typical precision farming techniques include: varying the planting density of individual plants based on the ability of the soil to support growth of the plants; and the selective application of farming products such as herbicides, insecticides, and, of particular interest, fertilizer.

In contrast, the most common farming practice is to apply a product to an entire field at a constant rate of application. The rate of application is selected to maximize crop yield over the entire field. Unfortunately, it would be the exception rather than the rule that all areas of a field have consistent soil conditions and consistent crop conditions. Accordingly, this practice typically results in over application of product over a portion of the field, which wastes money and may actually reduce crop yield, while also resulting in under application of product over other portions of the field, which may also reduce crop yield.

Perhaps even a greater problem with the conventional method is the potential to damage the environment through the over application of chemicals. Excess chemicals, indiscriminately applied to a field, ultimately find their way into the atmosphere, ponds, streams, rivers, and even the aquifer. These chemicals pose a serious threat to water sources, often killing marine life, causing severe increases in algae growth, leading to eutrophication, and contaminating potable water supplies.

Thus it can be seen that there are at least three advantages to implementing precision farming practices. First, precision farming has the potential to increase crop yields, which will result in greater profits for the farmer. Second, precision farming may lower the application rates of seeds, herbicides, pesticides, and fertilizer, reducing a farmer's expense in producing a crop. Finally, precision farming will protect the environment by reducing the amount of excess chemicals applied to a field, which may ultimately end up in a pond, stream, river, and/or other water source.

Predominately, precision farming is accomplished by either: 1) storing a prescription map of a field wherein predetermined application rates for each location are stored for later use; or 2) by setting application rates based on real-time measurements of crop and/or soil conditions. In the first method, a global positioning system (GPS) receiver, or its equivalent, is placed on a vehicle. As the vehicle moves through the field, application rates taken from the prescription map are used to adjust variable rate application devices such as spray nozzles. A number of difficulties are associated with the use of such a system, for example: due to the offset between the GPS receiver and the application device, the system must know the exact attitude of the vehicle in order to calculate the precise location of each application device, making it difficult to achieve a desirable location size; soil and plant conditions must be determined and a prescription developed and input prior to entering the field; and resolving a position with the requisite degree of accuracy requires relatively expensive equipment.

In the latter method, a sensor is used to detect particular soil and plant conditions as the application equipment is driven through the field. The output of the sensor is then used to calculate application rates and adjust a variable rate application devices in real time. Since the physical relationship between the sensor and the application device is fixed, the problems associated with positional based systems (i.e., GPS) are overcome. In addition, the need to collect crop data prior to entering the field is eliminate, as is the need for a prescription map.

With either technique, there is a need to sense the soil and/or crop conditions in order to determine a rate of application of a given farm product With regard to soil analysis, attempting to analyze the soil condition by way of a soil sample at each site would be time consuming and the handling of individual samples would be a logistical nightmare. Even with in-field analysis, the task would be daunting, at best

In the past, the measuring of plant reflectance has shown some promise for identifying specific growing conditions. The measurements of plant reflectance is non-invasive to growing crops, may be performed very quickly, and is exceptionally conducive to advanced farming techniques. Unfortunately, there has been no method to interpret such information to determine the application rate of fertilizer. An example of a device which uses reflectance for the selective application of herbicide is described in United States Patent No. 5,585,626 issued to Beck et al.

Thus it is an object of the present invention to provide a convenient method for determining an application rate for the in-season application of nutrients, which is non-invasive to growing crops and is conducive to advanced farming techniques.

WO 01/45490 discloses a method for fertilizing cultivated plants for optimizing the quantify and quality of the yield.

## SUMMARY OF THE INVENTION

The present invention provides a method for determining in-season macro and micronutrient application based on predicted yield potential and a nutrient response index. In a preferred embodiment of the inventive method, remote sensing is employed to determine plant need for a particular nutrient and to determine mid-season yield potential. An optical sensor is used to measure the reflectance of a target plant at one or more wavelengths of light and, based on known reflectance properties of the target, an output is provided which is indicative of the need for the nutrient. The inventive process is applicable to any crop nutrient whose projected need can be based on predicted removal of the nutrient derived from potential yield. By way of example and not limitation, such nutrients include nitrogen, phosphorus, and potassium.

Efficiency of site-specific nutrient management is largely determined by how well small-scale spatial variability is managed and the time when fertilizers are applied. During the crop growing season (in-season), knowledge of yield potential is a key to successful variable rate nutrient applications. Maximum yield potential ("$YP_{MAX}$") is the theoretical biological maximum for a specific crop, grown within a specific region, and under defined management practices.

In the inventive method, the normalized difference vegetation index ("NDVI") is calculated from reflectance information gathered by scanning a plant. As a preliminary matter, a response index ($RI_{NDVI}$) is calculated, which is a measure of the expected response of the crop to adequate levels of a particular nutrient. $RI_{NDVI}$ is determined by sensing the NDVI of plants in a plot receiving adequate, but not excessive, pre-plant application of the nutrient of interest, divided by the NDVI of plants receiving conventional management.

At a site, NDVI is determined for the site and an in-season estimated yield (INSEY) index is calculated by dividing NDVI by the number of days from planting when the plant is actively growing. INSEY is then used to determine a potential yield ($YP_0$) which is the predicted yield with no additional fertilization. Based on these measurements, the predicted yield which can be attained with added nutrient ($YP_X$), may be projected by the equation:

$$YP_X = YP_0 * RI_{NDVI}$$

Through a series of calculations, $YP_X$ is used to determine the mid-season fertilizer requirement for a particular nutrient.

Virtually any method of measuring the reflectance of individual plants or small groups of plants will provide the desired results. However, preferred methods of measuring reflectance include: 1) the use of a passive sensor as described hereinbelow or 2) the use of an active sensor as described in co-pending United States Patent Application, Serial No. 09/912,077 entitled "Optical Spectral Reflectance Sensor and Controller".

In a preferred method, the reflectance properties of a target are known to be indicative of NDVI which, in turn, is indicative of the expected yield of the target plant. By measuring the reflected light at particular wavelengths, preferably in the ranges of red and near infrared, and the intensity of the light source at the same wavelengths, it is possible to predict, with a reasonable degree of certainty, the expected crop yield with the present level of available nutrients and the maximum crop yield if an ideal amount of nutrient is added. This information may be used in real time to control a variable rate applicator for applying a mid-growing season fertilizer or, alternatively, used to develop a prescription map for later application of mid-growing season fertilizer to a field. The location size in a site-specific application utilizing the present method is limited only by the resolution of the sensor and the resolution of the applicator.

In another preferred embodiment, a response index for a nutrient is determined by first scanning a nutrient rich non-limiting test strip and a strip planted according to the farmer's common practice. The NDVI for each strip is entered into a computer along with the response index, number of growing days since planting, and the maximum potential yield for the crop. Lookup tables are then assembled according to the inventive method such that, for a specific site, the application rate of the nutrient may be drawn from the table based on NDVI at the site, sprayer pressure, and the velocity of the vehicle. These lookup tables are transferred to the application equipment so that as the equipment is passed over a field, reflectance sensors scan each site to determine NDVI and each sensor draws the appropriate sprayer rate from its table and sets its associated sprayer to deliver the proper amount of nutrient to the site. The use of a lookup table dramatically reduces the amount of processing required at the time of application.

Further objects, features, and advantages of the present invention will be apparent to those skilled in the art upon examining the accompanying drawings and upon reading the following description of the preferred embodiments.

BRIEF DESCRIPTION OF THE DRAWINGS

FIG. 1A provides a side view of a farming vehicle having multiple sensors and spray nozzles for use with the inventive method mounted thereon.

FIG. 1B provides a top view of the farming vehicle having a typical arrangement of sensors and spray nozzles for use with the inventive method mounted thereon.

FIG. 2 provides a perspective view of a hand held analyzer wherein an active sensor is employed.

FIG. 3 provides a block diagram of a passive reflectance sensor suitable for use with the inventive method.

FIG. 4 provides a block diagram of an active reflectance sensor suitable for use with the inventive method.

FIG. 5 provides a schematic representation of an emitter circuit employed in the active reflectance sensor.

FIG. 6 provides a schematic representation of a receiver circuit employed in the active reflectance sensor.

FIG. 7 provides a block diagram of a preferred system for practicing the inventive method.

DETAILED DESCRIPTION OF THE PREFERRED EMBODIMENT

Before explaining the present invention in detail, it is important to understand that the invention is not limited in its application to the details of the construction illustrated and the steps described herein. The invention is capable of other embodiments and of being practiced or carried out in a variety of ways. It is to be understood that the phraseology and terminology employed herein is for the purpose of description and not of limitation.

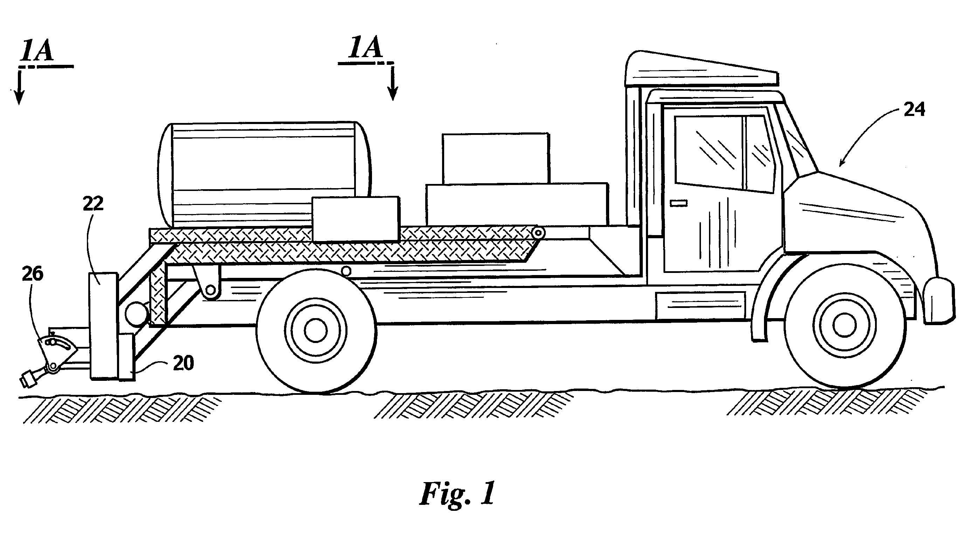

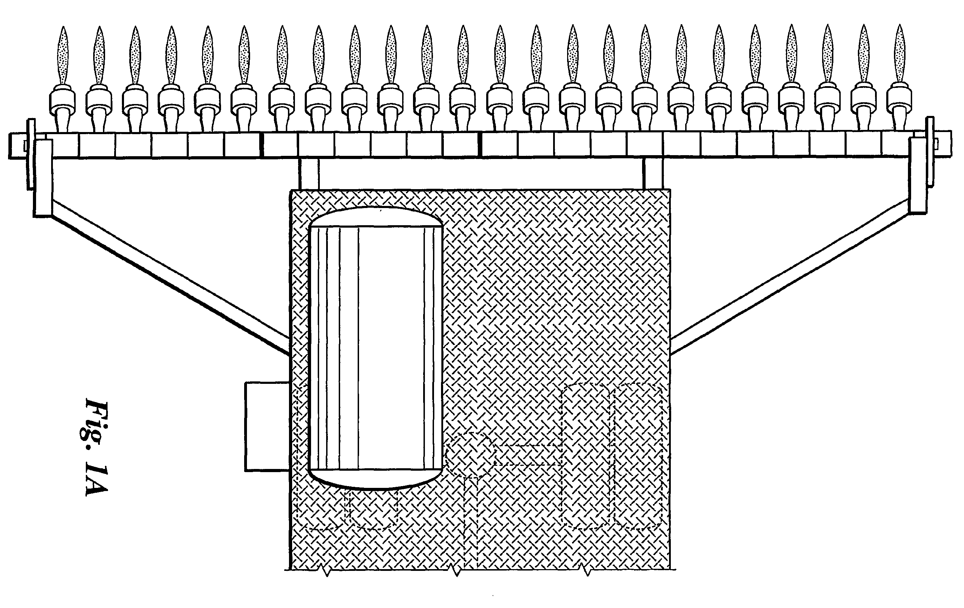

Referring now to the drawings, wherein like reference numerals indicate the same parts throughout the several views, a preferred embodiment of the inventive method is incorporated in the fertilizer spreading vehicle **24** shown in FIGS. 1A and 1B. Preferably, a plurality of sensors, of which sensor **20** is representative, are disposed along boom **22** at substantially equal spacings. Typically boom **22** extends laterally from vehicle **24**. Spray nozzles, of which nozzle **26** is representative, are also disposed along boom **22** preferably such that a nozzle **26,** or group of nozzles, corresponds to each sensor **20**. As the vehicle **24** travels along a crop row, boom **22** projects over the plants such that each sensor **20** measures the reflectance of plants in its immediate view, determines the extent to which fertilizer is needed according to the inventive method, and controls the rate of application of a nutrient through its corresponding nozzle **26.**

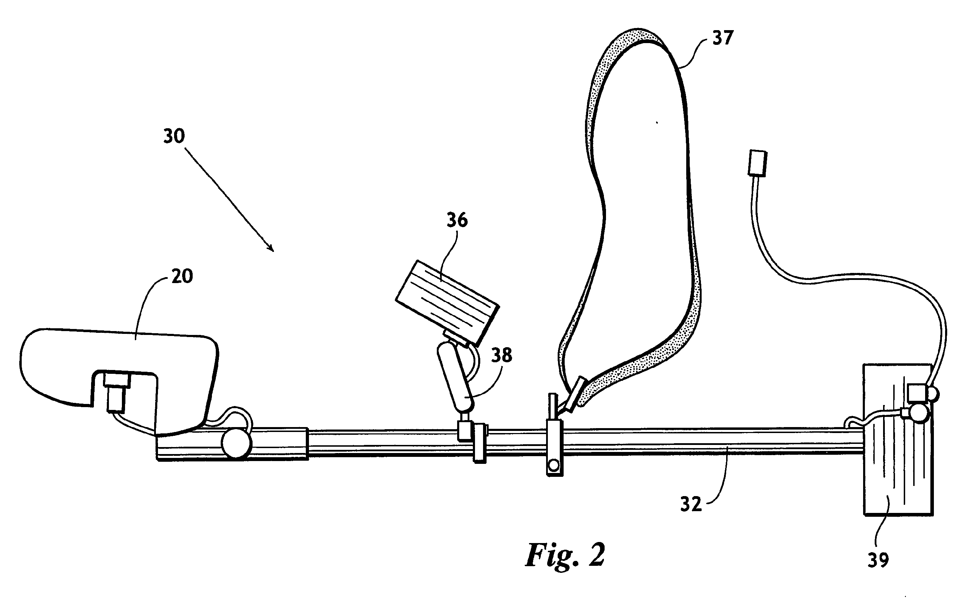

The inventive method may also be used to determine fertilizer requirements for incorporation into a prescription map or even for fertilizer requirements for a blanket application of fertilizer to an entire field. A method for making such measurements is with a handheld analyzer **30** as shown in FIG. 2. Analyzer **30** comprises: an elongated beam **32;** reflectance sensor **20** secured to the forward end of beam **32;** a controller **36** mounted centrally along beam **32;** a pistol grip **38** for holding analyzer **30;** and battery **39** placed at the end of beam **32** opposite the sensor to provide power for sensor **20** and to counter balance analyzer **30** while in use. Optionally, shoulder strap **37** may be used to reduce stress on the operator.

Generally speaking, a sensor may either emit light which is then reflected back to a receiver, referred to herein as an "active sensor" since the sensor actively produces its own light, or a sensor may take advantage of available light to measure reflectance properties which, for purposes of this invention, is referred to as a "passive sensor". Either sensor is well suited for use on analyzer **30.** Simply by way of example and not limitation, analyzer **30** is shown with an active sensor **20.**

Continuing with FIG. 2, preferably controller **36** is a compact computer such as a PDA, or the like. Such devices include a display for providing instructions and data to the operator. In addition, controller **36** preferably includes features such as: an interface for a removable, non-volatile memory for logging crop data; a global positioning system interface such as an USB port or conventional serial port for receiving and storing field coordinates; and a tachometer input for receiving pulses from a shaft encoder when used on a vehicle. These inputs allow analyzer **30** to store in nonvolatile memory, the condition of plants located at each particular site in a manner which allows later correlation of such data to a specific site. The stored data may then be used in forming a prescription map or for later analysis.

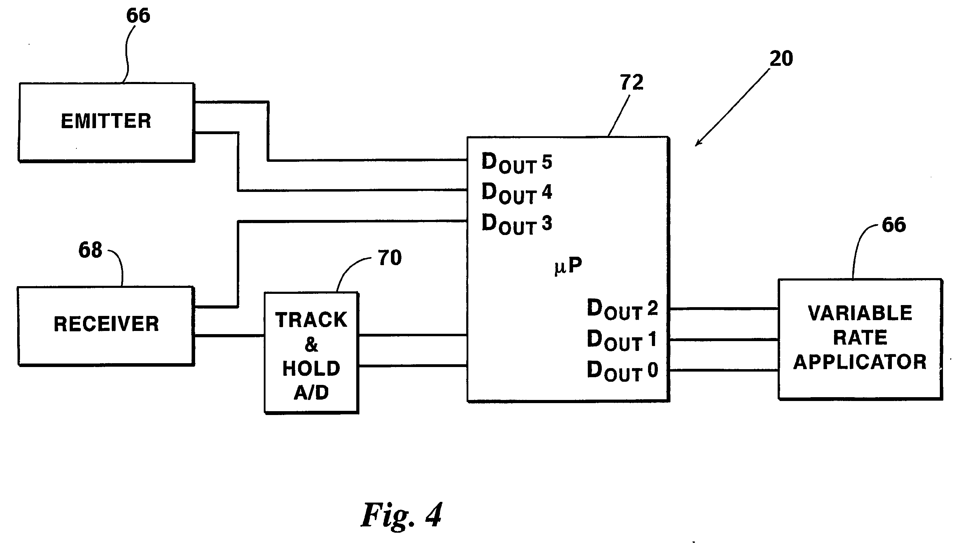

An active sensor suitable for use with the present invention is described in the aforementioned co-pending U.S. Patent Application, Serial No. 09/912,077 entitled "Optical Spectral Reflectance Sensor and Controller." Referring to FIG. 4, active sensor **20** comprises: an emitter **66;** a receiver **68;** an analog to digital converter **70;** and a microprocessor **72.**

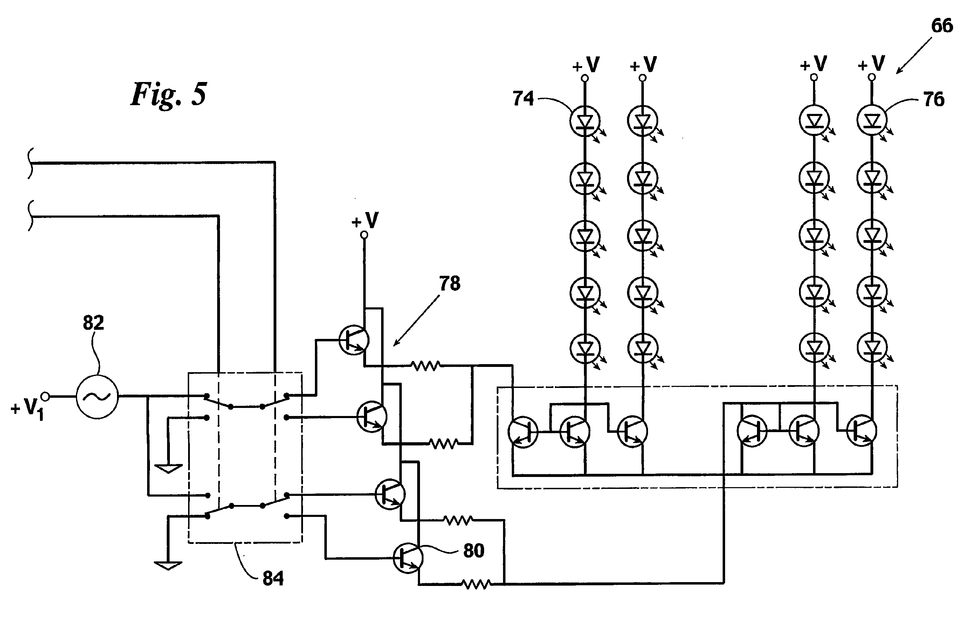

Referring next to FIG. 5, emitter **66** includes: a red light source **74,** preferably a plurality of LED devices; an infrared light source **76,** likewise preferably a plurality of LED devices; amplifiers **78** and **80** for driving LED devices **74** and **76,** respectively; an oscillator **82** for modulating sources **74** and **76;** and an analog selector **84** to allow microprocessor **72** (FIG. 4) to activate either the red light source **74** or the near infrared light source **76.**

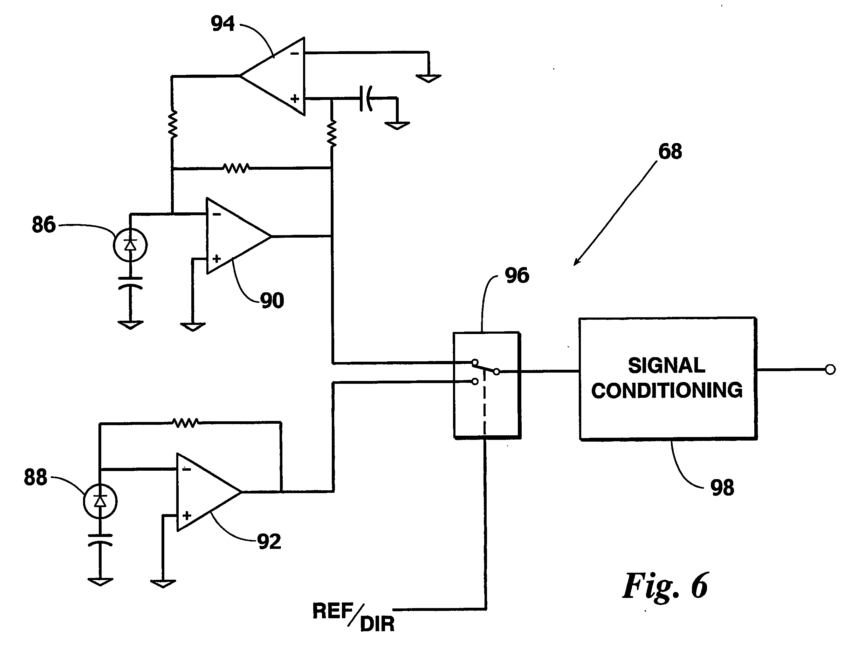

Turning now to FIG. 6, receiver **68** includes: a reflected light photo detector **86** for receiving light reflected by an object in the view of the sensor **20;** a direct light sensor **88** for receiving incident light from either the red source **74** or the near infrared source **76;** amplifiers **90** and **92** for amplifying the signals received by detectors **86** and **88,** respectively; amplifier **94** for compensating for ambient light striking detector **86;** analog selector **96** for selecting between the signals of detector **86** or detector **88;** and a signal conditioner **98** which bandpass filters the selected signal at the modulation frequency to discriminate between light from the emitter and ambient light.

Reflectance of the plant to red light is determined by dividing the output of the reflected light detector **86** by the output of the direct detector **88** while the red source **74** is active and the reflectance of the plant to near infrared is determined by dividing the output of the reflected light detector **86** by the output of the direct detector 88 while the infrared source **76** is active.

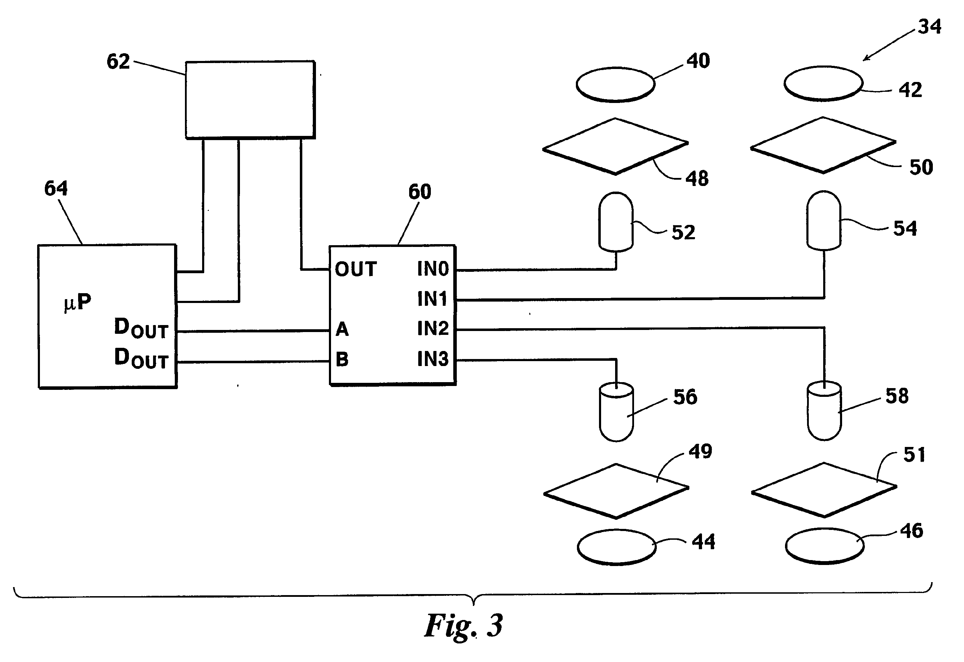

It should be noted that, while handheld sensor **30** and spreader **24** (FIGS. 1A and 1B) are described herein as incorporating an active sensor **20,** a passive sensor could easily be used instead in either device. An example of a suitable passive sensor **34** is shown in FIG. 3. Passive sensor **34** includes: two up-looking diffusers **40** and **42;** two down-looking lens **44** and **46;** an up-looking red filter **48** in optical alignment with diffuser **40;** an up-looking near infrared filter **50** in optical alignment with diffuser **42;** a down-looking red filter **49** in alignment with lens **44;** a down-looking near infrared filter **51** in optical alignment with lense **46.** For each lens **40-46** there is a corresponding photo detector **52-58.** The output of each detector is directed to the input of an analog multiplexer **60** and to an analog to digital converter **62.** Preferably, analog to digital converter **62** provides 16 bits of resolution, however the resolution of converter **62** is not critical. Converter **62** is in communication with microprocessor **64** such that, microprocessor **64** can select a particular photo detector via multiplexer **60,** perform a conversion on the signal produced by the detector, and read the converted value from converter **62.**

Reflectance for red is then calculated by dividing the intensity of reflected red light, as read from down-looking photo detector **56,** by the intensity of the incident red light, as read from up-looking photo detector **52.** The reflectance at near infrared is calculated in a similar manner by dividing the intensity of reflected near infrared, as read from detector **58** by the intensity of incident near infrared, as read from detector **54.**

Although, as will become apparent from the discussion hereinbelow, the preferred embodiment of the inventive method requires reflectance information for both red light and near infrared light, the means by which the information is obtained is not critical. Thus, while two techniques are given by way of example, the inventive method is not so limited and, by way of further example and not by way of limitation, reflectance information could instead be determined by techniques such as aerial survey, image processing of video information, or the like.

The normalized difference vegetation index (NDVI) provides an estimate of the biomass of a plant at the time of measurement. One method of determining NDVI is through the scanning of a plant, or group of plants, to determine the reflectance of the plant at red light having a wavelength of approximately 660 nanometers and the reflectance of the plant at near infrared light having a wavelength of approximately 780 nanometers. NDVI is then calculated as follows:

$$\mathrm{NDVI} = (\mathrm{NIR\text{-}red}) \, / \, (\mathrm{NIR} + \mathrm{red})$$

where "NIR" is reflectance at near infrared light and "red" is the reflectance value at red light It should be noted that NDVI is a dimensionless value.

Typically, a reflectance sensor will include a computing device. The calculation of NDVI within the sensor is well within the abilities of such computing devices. Thus, it is preferable that the NDVI calculation is implemented as software or firmware either within the sensor or in communication with the sensor. In a preferred embodiment, computer instructions are encoded in a device readable by the computer, i.e., a RAM device, a ROM device, whether PROM, EPROM, EEPROM, or a masked device, flash RAM, a RAM card, a ROM card, a floppy disk, a magnetic disk, a magnetic tape, a magneto-optical disk, an optical disk, a CD-ROM disk, a DVD disk, or the like.

By way of example and not limitation, when the inventive method is used with wheat, reflectance readings are generally collected between 80 and 150 days after planting. The dates where readings are collected generally range between Feekes physiological growth stage 4 wherein leaf sheaths are beginning to lengthen, and stage 6 wherein the first node stem is visible. Preferably, reflectance readings are taken over a surface area small enough that there is little variability in soil test parameters over the scanned area. A surface area of approximately 1 square meter has proven adequate although more preferably, each site will have a surface area on the order of 0.6 square meters.

As a preliminary matter, a nutrient response index ($RI_{NDVI}$) for the field must be determined. A pre-plant non-limiting, or nutrient rich, strip will be established in each field at, or near, planting time. Regardless of the particular fertilization practice employed by a farmer, the non-limiting strip can be used to determine the likelihood of obtaining an in-season response to a particular nutrient, specifically tailored to that particular farmer's practice. Prior to applying topdress fertilizer, the non-limiting strip will be scanned to determine NDVI, as will be a parallel strip fertilized according to the conventional practice of the farmer. The response index may then be calculated as:

$$RI_{NDVI} = NDVI \text{ from the non-limiting strip} / NDVI \text{ from the farmer practice strip.}$$

Where a nutrient rich non-limiting strip was not established at or before planting, or the nutrient was not applied prior to planting, $RI_{NDVI}$ may instead be determined by sensing the spatial variability in NDVI reading from one pass through the entire field. The response index computed from spatial variability ($RI_{SV}$) is calculated by:

$$RI_{SV} = (\text{Average NDVI from one pass through the field} + 1 \text{ standard deviation}) / (\text{Average NDVI from the same pass} - 1 \text{ standard deviation})$$

Also prior to application of the topdress fertilizer the number of growing days since planting (GDP) must be determined. "GDP" is defined as the number of days in which the plant is actively growing. A growing day is one where the average temperature, $(T_{min} + T_{max})/2$, is greater than 4.4 degrees Celsius. This information is readily available in virtually any agricultural area. Typically, growing days are tracked by government agencies, universities, large farming operations, and the like. It should be noted that the inventive method may also use growing days since emergence in lieu of growing days since planting. GDP may be adjusted by excluding days where ambient temperatures are low enough that the crop does not actively grow.

To calculate fertilization requirements, a plant or group of plants is next scanned to determine the plant's NDVI. Assuming GDP is greater than zero, the in-season estimated yield index (INSEY) and the potential yield level ($YP_0$) with no added nutrient are calculated as follows:

$$INSEY = NDVI / GDP$$

$$YP_0 = 365.8e^{(INSEY/0.0035267)} \ (YP_0 \text{ in kg/ha})$$

Next, the predicted attainable yield with added nutrient X ($YP_X$) is calculated as:

$$YP_X = YP_0 * RI_{NDVI} \ (YP_X \text{ in kg/ha})$$

where the response index was calculated as previously described specific to the nutrient in question. It should be noted that two limits are preferably imposed on this calculation, namely: 1) $RI_{NDVI}$ cannot exceed 3.0; and 2) $YP_N$ cannot exceed $YP_{MAX}$ where $YP_{MAX}$ is the biological maximum for a specific crop, grown within a specific region, and under defined management practices. The value of 3.0 for maximum $RI_{NDVI}$ may vary for a specific crop, grown in a specific region under different conditions.

The predicted percent of nutrient X in the grain (PXG) is obtained from known averages in a specific crop type. It should be noted that "crop type" refers to a particular type of grain, rather than a species of grain, i.e., winter wheat, spring wheat, hard red, soft red, hybrid corn, sorghum, rice, etc. PXG is multiplied by $YP_x$ to obtain the mass (in kg) of X nutrient taken up in the grain. The average percent of a particular nutrient in a specific grain may be adjusted for regional variations.

Next, the predicted grain nutrient uptake (GXUP) at $YP_x$ and $YP_0$ are calculated:

$$GXUP_{YPX} = PXG * YP_X \text{ kg/ha}$$

$$GXUP_{YP0} = PXG * YP_0 \text{ kg/ha}$$

From these values, the in-season topdress fertilizer nutrient X requirement (FXR) is given by:

$$FXR = (GXUP_{YPX} - GXUP_{YP0}) / EFF_X$$

Where $EFF_x$ is the maximum nutrient use efficiency of an in-season application of nutrient X in the manner applied. $EFF_x$ via in-season foliar application for most required plant nutrients is approximately 0.7. $EFF_p$ is known to be approximately 0.5 for topdress phosphorus.

It should be noted that this procedure produces results which may be dramatically different from the procedures in current use. The inventive method prescribes increased nutrient application rates in areas of the field with high yield potential as indicated by INSEY and reduced nutrient application rates in areas of the field with lower yield potential. This is contrasted with prior thinking where fertilizer is applied in an attempt to bolster production in areas of a field having low production and withheld in areas of a field having relatively high production. Thus it can be seen that the purpose of the inventive method is to restrict the application of a nutrient to just the amount required such that the nutrient is not the limiting factor in crop yield.

It should also be noted that while the discussion of preferred embodiment is provided with regard to using the inventive method to improve the efficiency of farming cereal grain crops such as wheat, barley, corn, etc., the inventive method has far broader application and is useful for improving the growth of virtually any plant. While the constants used in the calculation of $YP_0$ may vary somewhat between various types of plants, the steps to arrive at the required fertilization rate are the same.

To summarize, the inventive method includes the steps of: determining NDVI of both a non-limiting test strip and a test strip planted according to conventional practice; calculating a response index for the field based on the NDVI values of the test strips; determining the NDVI, INSEY, and $YP_0$ for a site; extrapolating a predicted attainable yield, $YP_x$; and determining the nutrient requirement as the difference between the grain nutrient removal at $YP_x$ and at $YP_0$, adjusted by the efficiency of the plant in utilizing the available nutrient.

As will be apparent to those skilled in the art, the inventive method is well suited for incorporation into a software program for execution by a microprocessor or other computing device. When combined with a reflectance sensor as described hereinabove, the inventive method is ideally suited for use in a system which measures reflectance, calculates the requirements for nutrient X (FXR), and controls a variable rate applicator, in real time. In such a system, the calculations detailed hereinabove may be reduced to one or more computer programs stored on a computer readable storage device. Preferably, the program will be arranged in a modular fashion such that individual modules are responsible for each calculation and each control function.

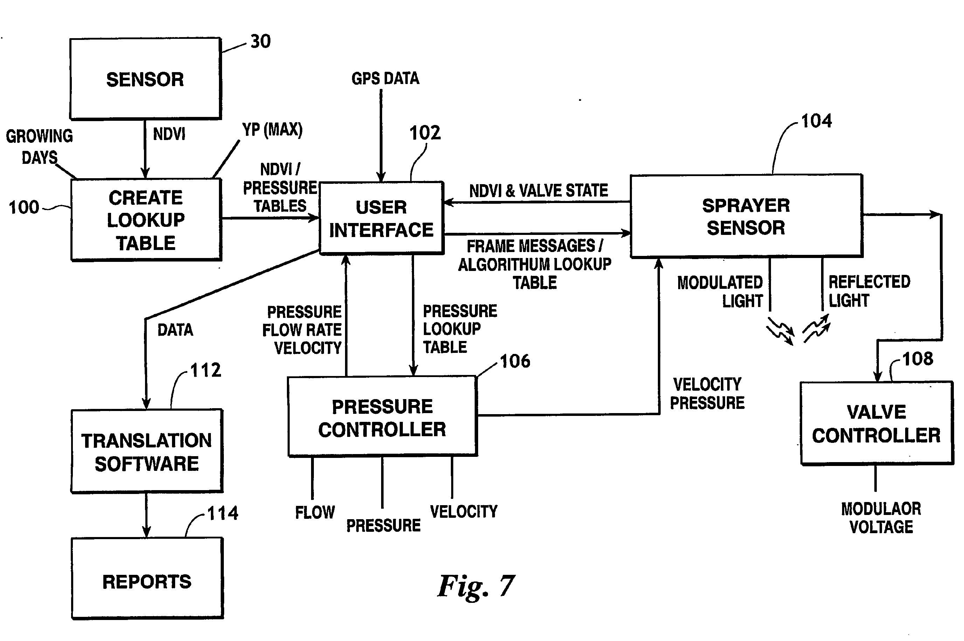

As a practical matter, it may not be desirable to perform all of the above described steps in a spraying apparatus at the time of spraying. As will be apparent to those skilled in the art, as sites get smaller, the amount of processing required to keep up with a sensor and its associated sprayer gets larger. Thus, to the degree possible, it may be desirable to perform as much of the calculation as possible, and reduce as many variables to constants as possible, prior to treating a field. A system for reducing the computing workload at the sprayer is shown in FIG. 7.

As an initial step, a handheld sensor **30** is used to scan the nutrient rich non-limiting strip and the strip planted according to conventional practice to determine NDVI for each strip. These values are then entered into a computer **100** along with the number of growing days since planting and $YP_{MAX}$ for the specific crop in the local region. Computer **100** then executes a program adapted to the particular crop, the particular nutrient, and the method of application to generate lookup tables for application rates of a fertilizer relative to the NDVI of a site, the sprayer pressure, and vehicle speed.

As can be seen in reviewing the equations used in the inventive method, NDVI of a site is the only variable information at the actual time of spraying. Thus, a lookup table for prescribed amounts of a nutrient may be generated for discrete NDVI values over a practical range of NDVI. As will be appreciated by those skilled in the art, drawing a value from a lookup table is a relatively simple task for a processor.

In addition to nutrient amounts, as determined above, prior to entering the field it is possible to generate lookup tables to convert nutrient amounts to sprayer rates. For a given amount of nutrient, a rate of application may be calculated, and a table of rates built, relative to vehicle speed and sprayer pressure.

These lookup tables are then transferred to a computer **102** located on the vehicle **24** (FIG. 1) by way of a memory card, serial port, network connection, wireless interface, or the like. Computer **102** provides the user interface for the operator of the vehicle to allow control of the system and feedback as the application process progresses. Computer **102** forwards NDVI lookup tables to the reflectance sensor **104** and pressure lookup tables to pressure controller **106**. With the tables resident at systems **104** and **106**, the system is ready to commence the application process.

Pressure controller **106** monitors the flow and pressure of the spray media, as well as the velocity of vehicle **24**. These values are returned to computer **102** for display to the operator and for storage for later analysis. Controller **106** also supplies pressure and velocity information to sensor **104**.

As vehicle **24** passes through the field, the beginning of each site is identified in a frame message transferred from computer **102** to sensor **104**. Upon receiving the message, sensor **104** scans the site, determines an NDVI for the site, and looks up a valve state based on NDVI, pressure, and velocity. Sensor **104** returns NDVI and the valve state values to computer **102** for display to the operator and to be stored for later analysis. The valve state value is also sent to valve controller **108** which, in turn, selectively opens individual valves of an array of binary weighted valves to deliver the appropriate amount of nutrient to the site.

It should be noted that, if controller **36** (FIG. 2) of sensor **30** includes a memory card interface, the memory card can be removed from sensor **30** and connected to computer **100** to provide the necessary information to calculate the response index. Computer **100** can then write the specific lookup tables to the memory card as they are produced. The memory card can then be transferred from computer **100** to computer **102** where the lookup tables are sent to the appropriate systems **104** and **106**. As the spraying operation progresses, GPS data, site NDVI values, valve states, and pressure, flow, and velocity data can be written to the memory card as spraying progresses. After the spraying operation, the information stored on the card can be processed at **112** to produce reports at **114** and archived to provide guidance for pre-plant fertilization in the next growing season as well as for use in making other crop and field management decisions.

With regard to calculating a predicted yield ($YP_0$), it is worth noting that research has shown the INSEY index to be a reliable predictor of final wheat grain yield for 24 sites over a four-year period. Of particular importance was the finding that a single equation was able to predict yield over a broad production range, 0.5 Mg/ha to 6.0 Mg/ha.

It should also be noted that the limits provided in regard to the calculation of attainable yield ($YP_x$) restrict the method to predicting reasonable production levels. Since $YP_x$ is extrapolated from observed growing conditions, it is important that reasonable biological and agronomic limits are applied to a predicted yield under optimum management and that a predicted yield is not extrapolated beyond reasonable expectations.

Finally, it should also be noted that, while farming applications of the inventive method were discussed in relation to the preferred embodiment, the invention is not so limited. The inventive method could be used to improve the efficiency of the application of fertilizer in virtually any crop. While the constants in the equations given above may vary from crop-to-crop, the inventive method is otherwise applicable to virtually any type of plant and can be applied with minor modification to any crop nutrient whose projected need could be based on predicted uptake in the grain, derived from predicted yield or $YP_0$. In addition, the inventive method is not limited to liquid fertilizers, but can also be used in the application of solid and gaseous forms. Accordingly, the terms "sprayer" and "nozzle" should be interpreted broadly to include applicators appropriate to the form of fertilizer selected.

Thus, the present invention is well adapted to carry out the objects and attain the ends and advantages mentioned above as well as those inherent therein. While presently preferred embodiments have been described for purposes of this disclosure, numerous changes and modifications will be apparent to those skilled in the art. Such changes and modifications are° encompassed within the scope of this invention as defined by the appended claims.

**Claims**

**1.** A method for in-season nutrient application including the steps of;

(a) determining a nutrient response index for a field;
(b) determining the normalized difference vegetation index of an area to fertilize;
(c) determining a predicted crop yield for said area;

(d) determining an attainable crop yield for said area;

(e) determining nutrient removal at said predicted crop yield;

(f) determining nutrient removal at said attainable crop yield;

(g) determining the amount of additional nutrient which must be supplied to achieve said attainable crop yield; and

(h) providing communication of said amount of nutrient.

2. The method of claim 1 wherein step (a) includes the substeps of:

   (a) determining a nutrient response index for a field by the substeps of:

      (i) providing a first area treated with a particular nutrient such that said first area is a non-limiting fertilized area;

      (ii) providing a second area treated with a predetermined amount of nutrient;

      (iii) determining the normalized difference vegetation index for said first area;

      (iv) determining the normalized difference vegetation index for said second area; and

      (iv) dividing said normalized difference vegetation index for said first area by said normalized difference vegetation index for said second area.

3. The method of claim 1 wherein step (b) includes the substeps of:

   (b) determining the normalized difference vegetation index of an area to fertilize by performing the steps of:

      (i) determining the reflectance of the vegetation in said area to red light;

      (ii) determining the reflectance of the vegetation in said area to near infrared light;

      (iii) dividing the difference of the reflectance determined step (b)(ii) minus the reflectance determined in step (b)(i) by the sum of the reflectance determined in step (b)(i) and the reflectance determined in step (b)(ii).

4. The method of claim 3 wherein the reflectance of the vegetation in said area to red light and the reflectance of the vegetation in said area to near infrared light are determined by scanning said vegetation with a reflectance sensor.

5. The method of claim 1 wherein step (c) includes the substeps of:

   (c) determining a predicted crop yield for said area by performing the steps of:

      (c)(i) determining the number of growing days since the planting of said crop;

      (c)(ii) calculating the in-season estimated yield index for said area by dividing the normalized difference vegetation index by the number of growing days;

      (c)(iii) calculating the predicted crop yield for said area as a function of the in-season estimated yield index for said area.

6. The method of claim 1 wherein said attainable crop yield is determined by multiplying said predicted crop yield times said response index.

7. The method according to claim 1, further comprising a step of determining an application rate for nutrient fertilizer including the steps of:

   (a) determining a nutrient response index by measuring the NDVI of a nutrient rich test strip and the NDVI of a test strip fertilized according to conventional practice;

   (b) generating a lookup table wherein values stored in the table are indicative of nutrient requirements relative to NDVI values;

   (c) transferring said lookup table to an apparatus for delivering the nutrient, said apparatus for delivering the nutrient having at least one sensor thereon for measuring crop NDVI and at least one controllable nozzle thereon for delivery of the nutrient to a crop;

   (d) scanning a site with said sensor to determine crop NDVI at said site;

   (e) drawing a nutrient requirement from said lookup table based on said crop NDVI;

   (g) controlling said controllable nozzle to deliver said nutrient requirement to said site.

8. The method according to claim 1, further comprising a step of communicating the proper amount of a nutrient to apply to a plant including the steps of:

(a) determining a maximum attainable yield for a crop of plants;

(b) determining an expected yield potential of a plant in said crop of plants under current conditions;

(c) determining a proper amount of the nutrient to apply to said plant by calculating the difference between said maximum attainable yield and said expected yield potential; and

(d) communicating said proper amount of the nutrient to apply to said plant.

9. The method of claim 8, wherein said expected yield potential is determined by remotely sensing at least one attribute of said plant that is indicative of the plant's nitrogen status.

10. The method of claim 9, wherein said at least one attribute comprises reflectance information of said plant.

11. The method of claim 10, wherein said reflectance information comprises spectral data from red or near infrared spectral bands.

12. The method of claim 11, wherein said expected yield potential is determined by:

(i) determining the reflectance of said plant to red light;

(ii) determining the reflectance of said plant to near infrared light;

(iii) dividing the difference of the reflectance determined in step (ii) minus the reflectance determined in step (i) by the sum of the reflectance determined in step (i) and the reflectance determined in step (ii).

13. The method of claim 8, wherein said maximum attainable yield is determined by:

(i) growing a portion of said crop in non-limiting conditions with respect to said nutrient;

(ii) determining the yield of crop by remotely sensing at least one attribute of plants within said portion of said crop, said at least one attribute being indicative of biomass and nitrogen content.

14. The method of claim 13, wherein said at least one attribute comprises reflectance information.

15. The method of claim 14, wherein said reflectance information comprises data from the red or near infrared spectral bands.

16. The method of claim 14, wherein said reflectance information comprises a vegetation index.

17. The method of claim 16, wherein said vegetation index is determined by:

(i) determining the reflectance of said plants within said portion to red light;

(ii) determining the reflectance of said plants within said portion to near infrared light;

(iii) dividing the difference of the reflectance determined in step (ii) minus the reflectance determined in step (i) by the sum of the reflectance determined in step (i) and the reflectance determined in step (ii).

18. The method of claim 8, wherein said proper amount of the nutrient to apply to said plant comprises:

(i) determining the amount of said nutrient in said expected yield;

(ii) determining the amount of said nutrient in said maximum attainable yield; and

(iii) determining the amount of additional said nutrient which must be applied to said plant to achieve said maximum attainable yield.

19. A device adapted for use by a digital computer wherein a plurality of computer instructions defining the method of claim 1, step (b) of claim 7 , or the method of claim 8, are encoded,

said device being readable by said digital computer,

said computer instructions programming said digital computer to perform said method, and,

said device being selected from the group consisting of computer RAM, computer ROM, a PROM chip, flash RAM, a ROM card, a RAM card, a floppy disk, a magnetic disk, a magnetic tape, a magneto-optical disk, an optical disk, a CD-ROM disk, or a DVD disk.

**Patentansprüche**

1. Verfahren für das saisonale Aufbringen von Nährstoffen, welches die folgenden Stufen umfaßt:

   (a) Bestimmen eines Nährstoffwirkungsindexes für ein Feld,
   (b) Bestimmen des normalisierten differenzierten Vegetationsindexes eines zu düngenden Bereichs,
   (c) Bestimmen eines vorhergesagten Ernteertrages für die Fläche,
   (d) Bestimmen eines erzielbaren Ernteertrages für die Fläche,
   (e) Bestimmen der Nährstoffentfernung bei dem vorhergesagten Ernteertrag,
   (f) Bestimmen der Nährstoffentfernung bei dem erzielbaren Ernteertrag,
   (g) Bestimmen der Menge an zusätzlichem Nährstoff, die zugeführt werden muß, um den erzielbaren Ernteertrag zu erreichen, und
   (h) Bereitstellen einer Mitteilung über die Menge an Nährstoff.

2. Verfahren nach Anspruch 1, wobei Stufe (a) die folgenden Teilstufen umfaßt,:

   (a) Bestimmen eines Nährstoffwirkungsindexes für ein Feld durch die folgenden Teilstufen:

   (i) Bereitstellen eines ersten Bereichs, der so mit einem bestimmten Nährstoff behandelt wurde, daß der erste Bereich ein unbeschränkter gedüngter Bereich ist,
   (ii) Bereitstellen eines zweiten Bereichs, der mit einer vorbestimmten Menge an Nährstoff behandelt wurde,
   (iii) Bestimmen des normalisierten differenzierten Vegetationsindexes für den ersten Bereich,
   (iv) Bestimmen des normalisierten differenzierten Vegetationsindexes für den zweiten Bereich und
   (v) Dividieren des normalisierten differenzierten Vegetationsindexes für den ersten Bereich durch den normalisierten differenzierten Vegetationsindex für den zweiten Bereich.

3. Verfahren nach Anspruch 1, wobei Stufe (b) die folgenden Teilstufen umfaßt,:

   (b) Bestimmen des normalisierten differenzierten Vegetationsindexes eines zu düngenden Bereichs durch Durchführen der folgenden Stufen:

   (i) Bestimmen der Reflexion der Vegetation in dem Bereich von rotem Licht,
   (ii) Bestimmen der Reflexion der Vegetation in dem Bereich von Licht im nahen Infrarotbereich,
   (iii) Dividieren der Differenz der in Stufe (b)(ii) bestimmten Reflexion minus der in Stufe (b)(i) bestimmten Reflexion durch die Summe der in Stufe (b)(i) bestimmten Reflexion und der in Stufe (b)(ii) bestimmten Reflexion.

4. Verfahren nach Anspruch 3, wobei die Reflexion der Vegetation in dem Bereich von rotem Licht und die Reflexion der Vegetation in dem Bereich von Licht im nahen Infrarotbereich durch Scannen der Vegetation mit einem Reflexionsscanner bestimmt wird.

5. Verfahren nach Anspruch 1, wobei Stufe (c) die folgenden Teilstufen umfaßt,:

   (c) Bestimmen eines vorhergesagten Ernteertrags für den Bereich durch Durchführen der folgenden Stufen:

   (c)(i) Bestimmen der Anzahl an Wachstumstagen seit dem Setzen der Kulturpflanze,
   (c)(ii) Berechnen des saisonalen geschätzten Ertragsindexes für den Bereich durch Dividieren des normalisierten differenzierten Vegetationsindexes durch die Anzahl an Wachstumstagen,
   (c)(iii) Berechnen des vorhergesagten Ernteertrags für den Bereich als eine Funktion des saisonalen geschätzten Ertragsindexes für den Bereich.

6. Verfahren nach Anspruch 1, wobei der erzielbare Ernteertrag durch Multiplizieren des vorhergesagten Ernteertrages mit dem Wirkungsindex bestimmt wird.

7. Verfahren nach Anspruch 1, welches weiterhin eine Stufe umfaßt, bei der man eine Aufbringungsgeschwindigkeit für Nährstoffdünger bestimmt, welche die folgenden Stufen umfaßt:

   (a) Bestimmen eines Nährstoffwirkungsindexes durch Messen des NDVI eines nährstoffreichen Teststreifens und des NDVI eines gemäß der üblichen Praxis gedüngten Teststreifens,

(b) Erzeugen einer Nachschlagtabelle, wobei in der Tabelle gespeicherte Werte Nährstofferfordernisse relativ zu NDVI-Werten anzeigen,

(c) Übertragen der Nachschlagtabelle in eine Vorrichtung zum Zuführen des Nährstoffs, wobei die Vorrichtung zum Zuführen des Nährstoffs wenigstens einen Sensor daran aufweist, um den NDVI der Pflanze zu messen, und wenigstens eine steuerbare Düse daran aufweist, um den Nährstoff einer Kulturpflanze zuzuführen,

(d) Abtasten eines Bereichs mit dem Sensor, um den NDVI der Kulturpflanze in dem Bereich zu bestimmen,

(e) Entnehmen eines Nährstofferfordemisses aus der Nachschlagtabelle auf Basis des NDVI der Kulturpflanze,

(g) Steuern der steuerbaren Düse, so daß sie dem Bereich den erforderlichen Nährstoff zuführt.

8. Verfahren nach Anspruch 1, welches weiterhin eine Stufe umfaßt, bei der die angemessene Menge eines Nährstoffs für die Aufbringung auf eine Pflanze mitgeteilt wird und welche die folgenden Stufen umfaßt,:

(a) Bestimmen eines maximal erzielbaren Ertrages für eine Menge von Pflanzen,

(b) Bestimmen eines erwarteten Ertragspotentials einer Pflanze in der Menge von Pflanzen unter gegenwärtigen Bedingungen,

(c) Bestimmen einer angemessenen Menge des Nährstoffs für die Zuführung an die Pflanze durch Berechnen der Differenz zwischen dem maximal erzielbaren Ertrag und dem erwarteten Ertragspotential und

(d) Mitteilen der angemessenen Menge des Nährstoffs für die Zuführung an die Pflanze.

9. Verfahren nach Anspruch 8, wobei das erwartete Ertragspotential durch Abtasten wenigstens eines Merkmals der Pflanze, welches den Stickstoffstatus der Pflanze anzeigt, aus der Ferne bestimmt wird.

10. Verfahren nach Anspruch 9, wobei das wenigstens eine Merkmal Reflexionsinformationen der Pflanze umfaßt.

11. Verfahren nach Anspruch 10, wobei die Reflexionsinformationen Spektraldaten aus Banden des roten Spektrums oder des nahen Infrarotspektrums umfaßt.

12. Verfahren nach Anspruch 11, wobei das erwartete Ertragspotential bestimmt wird durch:

(i) Bestimmen der Reflexion der Pflanze von rotem Licht,

(ii) Bestimmen der Reflexion der Pflanze von Licht im nahen Infrarotbereich,

(iii) Dividieren der Differenz aus der in Stufe (ii) bestimmten Reflexion minus der in Stufe (i) bestimmten Reflexion durch die Summe der in Stufe (i) bestimmten Reflexion und der in Stufe (ii) bestimmten Reflexion.

13. Verfahren nach Anspruch 8, wobei der maximal erzielbare Ertrag bestimmt wird durch:

(i) Züchten eines Teils der Kulturpflanzen in nicht-beschränkenden Bedingungen in Bezug auf den Nährstoff.

(ii) Bestimmen des Ertrags der Kulturpflanzen in diesem Teil der Kulturpflanzen durch Abtasten wenigstens eines Merkmals der Pflanzen aus der Ferne, wobei das wenigstens eine Merkmal die Biomasse und den Stickstoffgehalt anzeigt.

14. Verfahren nach Anspruch 13, wobei das wenigstens eine Merkmal Reflexionsinformationen umfaßt.

15. Verfahren nach Anspruch 14, wobei die Reflexionsinformationen Daten aus Banden des roten Spektrums oder des nahen Infrarotspektrums umfassen.

16. Verfahren nach Anspruch 14, wobei die Reflexionsinformationen einen Vegetationsindex umfassen.

17. Verfahren nach Anspruch 16, wobei der Vegetationsindex bestimmt wird durch:

(i) Bestimmen der Reflexion der Pflanzen innerhalb des Teils von rotem Licht,

(ii) Bestimmen der Reflexion der Pflanzen innerhalb des Teils von Licht im nahen Infrarotbereich,

(iii) Dividieren der Differenz der in Stufe (ii) bestimmten Reflexion minus der in Stufe (i) bestimmten Reflexion durch die Summe der in Stufe (i) bestimmten Reflexion und der in Stufe (ii) bestimmten Reflexion.

18. Verfahren nach Anspruch 8, wobei die angemessene Menge an Nährstoff, die der Pflanze zugeführt werden soll, folgendes umfaßt:

(i) Bestimmen der Menge an Nährstoff in dem erwarteten Ertrag,

(ii) Bestimmen der Menge an Nährstoff in dem maximal erzielbaren Ertrag und

(iii) Bestimmen der Menge an zusätzlichem Nährstoff, die der Pflanze zugeführt werden muß, um den maximal erzielbaren Ertrag zu erreichen.

**19.** Vorrichtung, die zur Verwendung durch einen digitalen Computer ausgelegt ist, wobei eine Mehrzahl von Computerbefehlen, die das Verfahren nach Anspruch 1, Stufe (b) von Anspruch 7 oder das Verfahren nach Anspruch 8 definieren, codiert sind,

wobei die Vorrichtung von dem digitalen Computer abgelesen werden kann,

wobei die Computerbefehle den digitalen Computer so programmieren, daß er das Verfahren ausführt, und

wobei die Vorrichtung aus der Gruppe ausgewählt ist, bestehend aus Computer-RAM, Computer-ROM, einem PROM-Chip, einem Flash-RAM, einer ROM-Karte, einer RAM-Karte, einer Diskette, einer Magnetplatte, einem Magnetband, einer magnetooptischen Platte, einer optischen Platte, einer CD-ROM oder einer DVD.

**Revendications**

**1.** Procédé d'application d'une substance nutritive en saison, comprenant les étapes consistant à :

(a) déterminer un indice de réponse à une substance nutritive pour un champ ;

(b) déterminer l'indice de végétation par différence normalisée d'une zone à fertiliser ;

(c) déterminer un rendement de culture prévu pour ladite zone ;

(d) déterminer un rendement de culture pouvant être atteint pour ladite zone ;

(e) déterminer l'élimination de la substance nutritive audit rendement de culture prévu :

(f) déterminer l'élimination de la substance nutritive audit rendement de culture pouvant être atteint ;

(g) déterminer la quantité de substance nutritive supplémentaire qui doit être fournie pour atteindre ledit rendement de culture pouvant être atteint ; et

(h) assurer la communication de ladite quantité de substance nutritive.

**2.** Procédé suivant la revendication 1, dans lequel l'étape (a) comprend les sous-étapes consistant à :

(a) déterminer un indice de réponse à la substance nutritive pour un champ par les sous-étapes consistant à :

(i) établir une première zone traitée avec une substance nutritive particulière de telle sorte que ladite première zone soit une zone fertilisée non limitante ;

(ii) établir une seconde zone traitée avec une quantité prédéterminée de substance nutritive ;

(iii) déterminer l'indice de végétation par différence normalisée pour ladite première zone ;

(iv) déterminer l'indice de végétation par différence normalisée pour ladite seconde zone ; et

(iv) diviser ledit indice de végétation par différence normalisée pour ladite première zone par ledit indice de végétation par différence normalisée pour ladite seconde zone.

**3.** Procédé suivant la revendication 1, dans lequel l'étape (b) comprend les sous-étapes consistant à :

(b) déterminer l'indice de végétation par différence normalisée d'une zone à fertiliser en mettant en oeuvre les étapes consistant à :

(i) déterminer la réflectance de la végétation de ladite zone à la lumière rouge ;

(ii) déterminer la réflectance de la végétation de ladite zone à la lumière proche infrarouge ;

(iii) diviser la différence de la réflectance déterminée dans l'étape (b)(ii) moins la réflectance déterminée dans l'étape (b) (i) par la somme de la réflectance déterminée dans l'étape (b)(i) et de la réflectance déterminée dans l'étape (b) (ii).

**4.** Procédé suivant la revendication 3, dans lequel la réflectance de la végétation dans ladite zone à la lumière rouge et la réflectance de la végétation dans ladite zone à la lumière proche infrarouge sont déterminées par balayage de la végétation avec un capteur de réflectance.

**5.** Procédé suivant la revendication 1, dans lequel l'étape (c) comprend les sous-étapes consistant à :

(c) déterminer un rendement de culture prévu pour ladite zone en mettant en oeuvre les étapes consistant à :

(c)(i) déterminer le nombre de jours de croissance depuis la plantation de ladite culture ;
(c)(ii) calculer l'indice de rendement estimé en saison pour ladite zone en divisant l'indice de végétation par différence normalisée par le nombre de jours de croissance ;
(c)(iii) calculer le rendement de culture prévu pour ladite zone en fonction de l'indice de végétation estimé en saison pour ladite zone.

6. Procédé suivant la revendication 1, dans lequel ledit rendement de culture pouvant être atteint est déterminé en multipliant ledit rendement de culture prévu par ledit indice de réponse.

7. Procédé suivant la revendication 1, comprenant en outre une étape de détermination d'un taux d'application pour le fertilisant nutritif, comprenant les étapes consistant à :

(a) déterminer un indice de réponse à la substance nutritive en mesurant le NDVI d'une bande de terrain d'essai riche en substance nutritive et le NDVI d'une bande de terrain d'essai fertilisée suivant la pratique classique ;
(b) engendrer un tableau de consultation dans lequel les valeurs mémorisées dans le tableau indiquent les besoins en substance nutritive par rapport aux valeurs de NDVI ;
(c) transférer ledit tableau de consultation à un appareil pour délivrer la substance nutritive, ledit appareil pour délivrer la substance nutritive portant au moins un capteur pour mesurer le NDVI de la culture et au moins une buse réglable sur celui-ci pour délivrer la substance nutritive à une culture ;
(d) balayer un site avec ledit capteur pour déterminer le NDVI de la culture au niveau dudit site ;
(e) extraire un besoin en substance nutritive dudit tableau de consultation d'après ledit NDVI de la culture ;
(g) commander ladite buse réglable pour délivrer la quantité correspondant audit besoin en substance nutritive audit site.

8. Procédé suivant la revendication 1, comprenant en outre une étape de communication de la quantité convenable d'une substance nutritive à appliquer à une plante, comprenant les étapes consistant à :

(a) déterminer un rendement maximal pouvant être atteint pour une culture de plantes ;
(b) déterminer un potentiel de rendement prévu d'une plante dans ladite culture de plantes dans les conditions existantes ;
(c) déterminer une quantité convenable de la substance nutritive à appliquer à ladite plante en calculant la différence entre ledit rendement maximal pouvant être atteint et ledit potentiel de rendement prévu ;
(d) communiquer ladite quantité convenable de la substance nutritive à appliquer à ladite plante.

9. Procédé suivant la revendication 8, dans lequel ledit potentiel de rendement prévu est déterminé par captage à distance d'au moins une caractéristique de ladite plante qui est une indication de l'état d'utilisation de l'azote de la plante.

10. Procédé suivant la revendication 9, dans lequel ladite au moins une caractéristique comprend une information de réflectance de ladite plante.

11. Procédé suivant la revendication 10, dans lequel ladite information de réflectance comprend les résultats spectraux des bandes spectrales en lumière rouge ou proche infrarouge.

12. Procédé suivant la revendication 11, dans lequel ledit potentiel de rendement prévu est déterminé :

(i) en déterminant la réflectance de ladite plante à la lumière rouge ;
(ii) en déterminant la réflectance de ladite plante à la lumière proche infrarouge ;
(iii) en divisant la différence de la réflectance déterminée dans l'étape (ii) moins la réflectance déterminée dans l'étape (i) par la somme de la réflectance déterminée dans l'étape (i) et de la réflectance déterminée dans l'étape (ii).

13. Procédé suivant la revendication 8, dans lequel ledit rendement maximal pouvant être atteint est déterminé :

(i) en cultivant une partie de ladite culture dans des conditions non limitantes en ce qui concerne ladite substance nutritive ;

(ii) en déterminant le rendement de la culture par captage à distance d'au moins une caractéristique des plantes dans ladite portion de ladite culture, ladite au moins une caractéristique étant une indication de la biomasse et de la teneur en azote.

**14.** Procédé suivant la revendication 13, dans lequel ladite au moins une caractéristique comprend une information de réflectance.

**15.** Procédé suivant la revendication 14, dans lequel ladite information de réflectance comprend les résultats des bandes spectrales en lumière rouge ou proche infrarouge.

**16.** Procédé suivant la revendication 14, dans lequel ladite information de réflectance comprend un indice de végétation.

**17.** Procédé suivant la revendication 16, dans lequel ledit indice de végétation est déterminé :

(i) en déterminant la réflectance desdites plantes dans ladite partie à la lumière rouge ;
(ii) en déterminant la réflectance desdites plantes dans ladite partie à la lumière proche infrarouge ;
(iii) en divisant la différence de la réflectance déterminée dans l'étape (ii) moins la réflectance déterminée dans l'étape (i) par la somme de la réflectance déterminée dans l'étape (i) et de la réflectance déterminée dans l'étape (ii).

**18.** Procédé suivant la revendication 8, dans lequel ladite quantité convenable de la substance nutritive à appliquer à ladite plante comprend :

(i) la détermination de la quantité de ladite substance nutritive correspondant audit rendement prévu ;
(ii) la détermination de la quantité de ladite substance nutritive correspondant audit rendement maximal pouvant être atteint ; et
(iii) la détermination de la quantité de ladite substance nutritive supplémentaire qui doit être appliquée à ladite plante pour atteindre ledit rendement maximal pouvant être atteint.

**19.** Dispositif adapté à l'utilisation par un ordinateur numérique, dans lequel une pluralité d'instructions informatiques définissant le procédé de la revendication 1, le procédé de l'étape (b) de la revendication 7, ou le procédé de la revendication 8, est codée,
ledit dispositif pouvant être lu par ledit ordinateur numérique ;
lesdites instructions informatiques programmant ledit ordinateur numérique pour la mise en oeuvre dudit procédé, et ledit dispositif étant choisi dans le groupe consistant en une mémoire vive RAM d'ordinateur, une mémoire morte ROM d'ordinateur, une puce à mémoire morte programmable PROM, une mémoire vive RAM flash, une carte à mémoire morte ROM, une carte à mémoire vive RAM, une disquette, un disque magnétique, un ruban magnétique, un disque magnéto-optique, un disque optique, un disque de CD-ROM ou un disque de DVD.

*Fig. 1*

*Fig. 1A*

Fig. 2

**Fig. 3**

*Fig. 4*

EP 1 411 758 B1

*Fig. 5*

EP 1 411 758 B1

*Fig. 6*

EP 1 411 758 B1

*Fig. 7*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5585626 A
- WO 0145490 A
- US 09912077 B
- US 912077 A